# EUROPÄISCHE PATENTSCHRIFT

(11) **EP 3 645 449 B1**
(45) Veröffentlichungstag und Bekanntmachung des Hinweises auf die Patenterteilung: **28.08.2024**
(21) Anmeldenummer: 18734556.6
(22) Anmeldetag: 28.06.2018
(51) Int. Cl.: B67C 3/28, B67C 3/26, F16K 31/06

(54) **MAGNETORHEOLOGISCHER AKTUATOR FÜR EINER BEFÜLLUNGSEINHEIT EINER GETRÄNKEABFÜLLANLAGE**
MAGNETORHEOLOGICAL ACTUATOR FOR A FILLING UNIT OF A BEVERAGE FILLING SYSTEM
ACTIONNEUR MAGNÉTORHÉOLOGIQUE CONÇU POUR UNE UNITÉ DE REMPLISSAGE D'UNE INSTALLATION DE CONDITIONNEMENT DE BOISSON

(30) Priorität: 30.06.2017 DE 102017114712
(43) Veröffentlichungstag der Anmeldung: 06.05.2020
(73) Patentinhaber: KHS GmbH, 44143 Dortmund (DE)
(72) Erfinder: OHREM, Jochen, 55128 Mainz (DE); LORENZ, Jonathan, 55545 Bad Kreuznach (DE); BRUCH, Bernd, 55595 Weinsheim (DE); CLÜSSERATH, Ludwig, 55543 Bad Kreuznach (DE)
(86) Internationale Anmeldenummer: PCT/EP2018/067346
(87) Internationale Veröffentlichungsnummer: WO 2019/002428

(56) Entgegenhaltungen:
- WO-A1-2017/148614
- DE-A1- 102013 214 952
- DE-B4- 112005 000 562
- YANCHENG LI ET AL: "A state-of-the-art review on magnetorheological elastomer devices", SMART MATERIALS AND STRUCTURES, IOP PUBLISHING LTD., BRISTOL, GB, vol. 23, no. 12, 11 November 2014 (2014-11-11), pages 123001, XP020274381, ISSN: 0964-1726, [retrieved on 20141111], DOI: 10.1088/0964-1726/23/12/123001

## Beschreibung

Die vorliegende Erfindung betrifft einen Aktuator zur Steuerung der Fluidwege einer Befüllungseinheit für eine Getränkeabfüllanlage, eine Befüllungseinheit für eine Getränkeabfüllanlage sowie eine Getränkeabfüllanlage.

Getränkeabfüllanlagen werden verwendet zum industriellen Abfüllen von Getränken, hierbei sowohl für sogenannte Soft-Drinks als auch alkoholische Getränke.

Für den Abfüllvorgang sind eine Vielzahl von Ventilen notwendig, die das Getränk in der gewünschten Menge in das zu befüllende Behältnis einleiten. Außerdem werden die Behälter vor dem Befüllen zunächst ggf. evakuiert, um den darin vorhandenen Sauerstoff zu verdrängen und beispielsweise anschließend mit Kohlendioxid unter ca. 2 bar geflutet. Das Öffnen und Schließen der Ventile wird mittels Aktuatoren gesteuert, die die erforderliche Bewegung mit der nötigen Kraft erzeugen. Gegenwärtig werden hierzu insbesondere elektro-pneumatische Aktuatoren verwendet.

Allerdings ist vorgesehen, die heute verwendeten elektro-pneumatischen Aktuatoren durch andere Aktuatoren zu ersetzen, da die Verwendung von elektro-pneumatischen Aktuatoren vergleichsweise teuer ist.

Aus dem Stand der Technik ist beispielsweise bereits ein elektro-magnetisches Ventil für ein Füllorgan einer Getränkeabfüllanlage aus der DE 10 2012 105 374 A1 bekannt.

Eine Füllmaschine zum Füllen von Behältern ist beispielsweise aus der DE 203 19 619 U1 und aus der DE 10 2010 032 398 A1 bekannt.

Aus der DE 11 2005 000 562 B4 ist es bekannt, einen Aktuator aus einem magnetorheologischen Elastomere für Dichtungen an Türen oder Türrahmen im Rahmen einer Dichtungsanordnung zu verwenden.

Aus der WO 2017/148614 A1 ist ein Aktuator zur Steuerung wenigstens eines Fluidweges einer Befüllungseinheit für eine Getränkeabfüllanlage bekannt geworden. Dieser umfasst wenigstens eine Steuereinheit und wenigstens ein Aktuatorelement, mittels dessen eine Stellkraft bereitstellbar ist, wobei mittels der Steuereinheit wenigstens ein erstes Steuersignal und wenigstens ein zweites Steuersignal bereitstellbar ist und wobei das Aktuatorelement aus einem Material besteht, das in Abhängigkeit von einem ersten Steuersignal eine erste Ausdehnung annimmt, in der das Aktuatorelement eine erste Ruheposition einnimmt, und das in Abhängigkeit von dem zweiten Steuersignal eine Ausdehnung annimmt, in der das Aktuatorelement eine zweite Anstellposition einnimmt. Die WO 2017/148614 A1 offenbart weiterhin, dass das Material des Aktuatorelements ein magnetorheologisches Elastomer sein kann oder umfassen kann und dass das magnetorheologische Elastomer mittels eines Elektromagnets aktiviert werden kann.

Es ist die Aufgabe der vorliegenden Erfindung, einen Aktuator zur Steuerung der Fluidwege einer Befüllungseinheit für eine Getränkeabfüllanlage, eine Befüllungseinheit für eine Getränkeabfüllanlage sowie eine Getränkeabfüllanlage in vorteilhafter Weise weiterzubilden, insbesondere dahingehend, dass ein Aktuator einfacher aufgebaut, kostengünstiger herstellbar und mit langer Standzeit bereitgestellt werden kann.

Diese Aufgabe wird erfindungsgemäß gelöst durch einen Aktuator mit den Merkmalen des Anspruchs 1. Danach ist vorgesehen, dass ein Aktuator zur Steuerung wenigstens eines Fluidweges einer Befüllungseinheit für eine Getränkeabfüllanlage mit wenigstens einer Steuereinheit und mit wenigstens einem Aktuatorelement, mittels dessen eine Stellkraft bereitstellbar ist, versehen ist. Das Aktuatorelement weist einen zu einem Sitz feststehenden Sitzteil und einen zum Sitz beweglichen Schließteil auf. Mittels der Steuereinheit ist wenigstens ein erstes Steuersignal und wenigstens ein zweites Steuersignal bereitstellbar, wobei das Aktuatorelement aus einem Material besteht, das in Abhängigkeit von dem ersten Steuersignal eine erste Form annimmt, in der das Aktuatorelement eine erste Ruheposition einnimmt, und das in Abhängigkeit von dem zweiten Steuersignal eine Form annimmt, in der das Aktuatorelement eine zweite Anstellposition einnimmt. Erfindungsgemäß ist auch vorgesehen, dass das Material des Aktuatorelements ein magnetorheologisches Elastomer ist oder umfasst. Es ist vorgesehen, dass der Aktuator mindestens einen Elektromagneten aufweist, wobei sich das Aktuatorelement in dem veränderlichen Magnetfeld des Elektromagneten befindet und das Magnetfeld des Elektromagneten durch das erste und zweite Steuersignal veränderbar ist. Ferner ist vorgesehen, dass das Aktuatorelement eine Fluidventilmembran ist und der Schließteil Bestandteil der Fluidventilmembran ist.

Magnetorheologische Elastomere (MRE) sind beispielsweise Komposite aus magnetisierbaren Partikeln, wie Eisen in einer Elastomermatrix wie Silikon oder Naturkautschuk. Beim Anlegen eines Magnetfelds verformt sich der MRE-Körper bzw. bewegt sich in dem Magnetfeld und führt eine aktuatorische Bewegung aus. Auch hier geht das Material beim Abschalten des Magnetfelds wieder in seine anfängliche Form bzw. Position zurück. Die Bewegung kann innerhalb weniger Millisekunden ausgeführt werden, sofern das Magnetfeld schnell genug aufgebaut werden kann. Das Aktuatorelement kann in seiner ersten Position einen Fluidweg der Befüllungseinheit dichtend betätigen und das Aktuatorelement kann in seiner zweiten Position den Fluidweg nicht dichtend betätigen. Dadurch kann einschließlich der entsprechenden funktionalen Verknüpfung eine einfache Steuerung des Fluidweges der Befüllungseinheit erreicht werden. Hierbei ist eine schnelle Hin- und Herbewegung des Schließteils aufgrund der Verwendung eines MRE in einem Magnetfeld gewährleistet.

Die Erfindung basiert auf dem Grundgedanken, einen Aktuator zur Steuerung wenigstens eines Fluidweges einer Befüllungseinheit für eine Getränkeabfüllanlage mit einem Aktuatorelement zu versehen, der aufgrund seiner Materialeigenschaften derart einfach angesteuert werden kann, dass aufgrund einer Formänderung des Aktuatorelements dieser wenigstens in zwei definierte Positionen, hier eine Ruheposition und eine Anstellposition, gebracht werden kann. In der Ruheposition kann beispielsweise vorgesehen sein, dass der Fluidweg geöffnet ist. Des Weiteren ist dann vorgesehen, dass in der Anstellposition der Fluidweg gesperrt wird. In diesem Zusammenhang ist insbesondere denkbar, dass die Stellkraft, die durch das Aktuatorelement in diesem Zusammenhang, hier beispielsweise in der Anstellposition, ausgeübt wird, ausreichend ist, um den Fluidweg dichtend zu verschließen. Grundsätzlich denkbar ist aber auch, dass die Ruheposition eine Position ist, in der der Fluidweg gesperrt ist und die Anstellposition eine Position, in der der Fluidweg geöffnet ist. In diesem Fall würde man von einem "Normally-Closed"-Aktuator (NORMAL GESCHLOSSEN Konfiguration) sprechen. Im vorstehend dargestellten Fall kann man von einem "Normally-Open"-Aktuator (NORMAL OFFEN Konfiguration) sprechen. Bei dem Fluidweg kann es sich insbesondere um einen Gasweg einer Befüllungseinheit handeln. Grundsätzlich denkbar ist aber auch, dass es sich etwa um einen Fluidweg zur Leitung des abzufüllenden Getränks handelt.

Eine vorteilhafte Weiterbildung der Erfindung sieht vor, dass das Aktuatorelement eine Scheibe ist, bei der insbesondere der Rand der feststehende Sitzteil ist. Dadurch können die Ventilwege bei gängigen Ventilen gut geschlossen bzw. geöffnet werden. Das Aktuatorelement ist erfindungsgemäß eine Fluidventilmembran.

Eine vorteilhafte Weiterbildung der Erfindung sieht vor, dass die Stellkraft wenigstens ca. 200-400 N, insbesondere ca. 350-370 N, vorzugsweise ca. 360 N beträgt. Diese Größenordnung einer Stellkraft hat sich als besonders vorteilhaft erwiesen, um einen sicheren Verschluss der Fluidwege bei den Arbeitsdrücken, die in der Befüllungseinheit und in der Getränkeabfüllanlage vorherrschen, bereitzustellen.

Eine weitere vorteilhafte Weiterbildung der Erfindung sieht vor, dass das Material des Aktuatorelements eine elektrorheologische Flüssigkeit oder ein Gel umfasst. Hier kann durch Anlegen einer Spannung eine Ausdehnung der Flüssigkeit oder des Gels erreicht werden.

Eine weitere vorteilhafte Weiterbildung der Erfindung sieht vor, dass das Aktuatorelement mit dem einen Ende einer Feder - Druckfeder oder Zugfeder - verbunden ist und deren anderen Ende fest mit dem Aktuator verbunden ist. Dadurch können in einfacher Art und Weise NORMAL OFFEN und NORMAL GESCHLOSSEN Konfigurationen erreicht werden.

Eine weitere vorteilhafte Weiterbildung der Erfindung sieht vor, dass der Aktuator zusätzlich zu dem ersten Aktuatorelement ein weiteres Aktuatorelement aufweist, das gleich ausgebildet ist wie das erste Aktuatorelement und parallel zu diesem angeordnet ist. Dadurch sind weitere Anwendungsfälle eröffnet, insbesondere bei Doppelventilen, kann ein gutes Öffnen und Schließen beider Fluidwege - auch unabhängig voneinander - erfolgen.

Eine weitere vorteilhafte Weiterbildung der Erfindung sieht vor, dass die beiden Aktuatorelemente in ihrer jeweiligen Ruheposition aneinander anliegen. Eine solche Anordnung baut kompakter als bei einer Ausgestaltung, bei der die beiden Aktuatorelemente voneinander beabstandet sind.

Eine weitere vorteilhafte Weiterbildung der Erfindung sieht vor, dass der Aktuator ein Doppelventil umfasst. Damit ist die Erfindung auf weiteren Gebieten einsetzbar.

Eine weitere vorteilhafte Weiterbildung der Erfindung sieht vor, dass der Aktuator zwei Elektromagnete aufweist, wobei der erste Elektromagnet oberhalb und der zweite Elektromagnet unterhalb des Aktuatorelements angeordnet sind. Dadurch ist es nicht nötig, eine Feder oder ein anderes Zusatzteil am Aktuatorelement anzubringen, das dieses wieder in seine erste Form zurückbringt. Darüber hinaus kann bei einer Ausgestaltung mit zwei Aktuatorelementen in einem Doppelventil eine Steuerung der beiden Aktuatoren (fast) unabhängig voneinander erfolgen.

Darüber hinaus kann vorgesehen sein, dass das Material des Aktuatorelementes eines oder mehrere der folgenden Materialen umfasst bzw. der Aktuator ein entsprechendes Element aufweist: eine magnetorheologische Flüssigkeit oder ein solches Gel, ein dielektrisches Elastomer, eine thermische Formgedächtnislegierung, eine magnetische Formgedächtnislegierung; eine Piezokeramik, einen Piezokeramikstapel, einen Piezo-Drucksensor.

Darüber hinaus kann vorgesehen sein, dass mehrere in Reihe geschaltete Aktuatorelemente vorgesehen sind. Insbesondere können dabei die Aktuatorelemente zumindest teilweise eine Faltenbalgstruktur ausbilden. Grundsätzlich ist denkbar, dass mehrere gleichartige Aktuatorelemente, d.h. mit gleichartiger bzw. identischer Materialauswahl verwendet werden. Grundsätzlich ist es alternativ oder zusätzlich auch möglich, mehrere Materialarten für die Aktuatorelemente, wie insbesondere vorstehend im Einzelnen aufgeführt, zu kombinieren, insbesondere im Hinblick auf die Erreichung und Einstellung entsprechender Stellkräfte, aber auch Hubwege.

Der Hubweg des Aktuators kann im Bereich einiger Millimeter liegen, wobei sich ein Hubweg von größer 1 mm, insbesondere im Bereich zwischen 5 bis 10 mm als vorteilhaft herausgestellt hat. Grundsätzlich denkbar sind aber auch Hubwege größer 10 mm, insbesondere dann, wenn es sich um die Steuerung von Fluidwegen für Flüssigkeiten handelt.

Das Aktuatorelement kann in seiner ersten Form eine Schaltstellung definieren, in der die Fluidventilmembran, als die das Aktuatorelement ausgebildet ist, in den wenigstens einen Fluidweg der Befüllungseinheit dichtend betätigt ist und das Aktuatorelement kann in seiner zweiten Form eine Schaltstellung definieren, in der die Fluidventilmembran nicht dichtend betätigt ist. Durch die Kombination von Aktuator und Fluidventilmembran und die entsprechende funktionale Verknüpfung kann eine einfache Steuerung des Fluidweges der Befüllungseinheit erreicht werden.

Des Weiteren wird die Aufgabe durch eine Befüllungseinheit für eine Getränkeabfüllanlage gemäß Anspruch 9 sowie durch eine Getränkeabfüllanlage gemäß Anspruch 10 gelöst. Da diese jeweils mindestens einen erfindungsgemäßen Aktuator enthalten, ergeben sich die oben zum Aktuator schon beschriebenen Vorteile analog.

Alle in den Unteransprüchen angegebenen Merkmale der vorteilhaften Weiterbildungen sind sowohl für sich jeweils einzeln als auch in beliebigen Kombinationen zur Erfindung gehörig.

Weitere Einzelheiten und Vorteile der Erfindung werden anhand von in den Zeichnungen dargestellten Ausführungsbeispielen näher erläutert.

Es zeigen:
- Fig. 1: eine schematische Schnittdarstellung einer erfindungsgemäßen Getränkeabfüllanlage mit einer erfindungsgemäßen Befüllungseinheit sowie einen erfindungsgemäßen Aktuator;
- Fig. 2a-b: schematische Darstellungen eines ersten Ausführungsbeispiels eines erfindungsgemäßen Aktuators;
- Fig. 3a-b: schematische Darstellungen eines zweiten Ausführungsbeispiels eines nicht erfindungsgemäßen Aktuators;
- Fig. 4a-b: schematische Darstellungen eines dritten Ausführungsbeispiels eines nicht erfindungsgemäßen Aktuators;
- Fig. 5a-b: schematische Darstellungen eines vierten Ausführungsbeispiels eines erfindungsgemäßen Aktuators;
- Fig. 6a-b: schematische Darstellungen eines fünften Ausführungsbeispiels eines erfindungsgemäßen Aktuators;
- Fig. 7a-b: schematische Darstellungen eines sechsten Ausführungsbeispiels eines erfindungsgemäßen Aktuators;
- Fig. 8a-b: schematische Darstellungen eines siebten Ausführungsbeispiels eines erfindungsgemäßen Aktuators;
- Fig. 9a-b: schematische Darstellungen eines achten Ausführungsbeispiels eines nicht erfindungsgemäßen Aktuators;
- Fig. 10a-c: schematische Darstellungen eines neunten Ausführungsbeispiels eines nicht erfindungsgemäßen Aktuators;
- Fig. 11a-b: schematische Darstellungen eines zehnten Ausführungsbeispiels eines erfindungsgemäßen Aktuators und
- Fig. 12a-c: schematische Darstellungen eines elften Ausführungsbeispiels eines erfindungsgemäßen Aktuators.

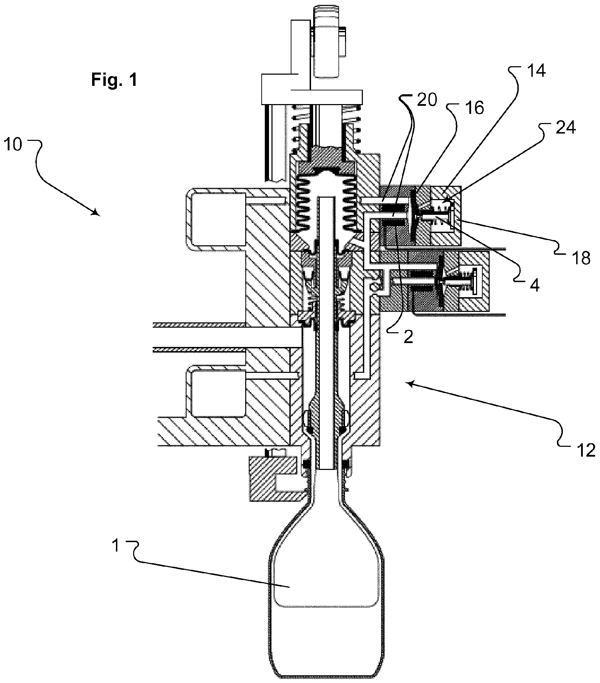

Fig. 1 zeigt eine schematische Schnittdarstellung in der Seitenansicht einer erfindungsgemäßen Getränkeabfüllanlage 10, hier teilweise dargestellt durch eine Befüllungseinheit 12 mit einem Aktuator 14 zur Steuerung wenigstens eines Fluidweges 20.

Der Aktuator 14 ist gemeinsam mit einer Fluidventilmembran 16 in einem Gehäuseteil 18 der Befüllungseinheit 12 angeordnet.

Des Weiteren ist eine Steuereinheit (nicht gezeigt) vorgesehen. Mittels der Steuereinheit kann wenigstens ein erstes Steuersignal und wenigstens ein zweites Steuersignal bereitgestellt werden.

Der Aktuator 14 weist ferner ein Aktuatorelement 24 auf. Das Aktuatorelement 24 besteht zumindest teilweise aus einem Material, das in Abhängigkeit von einem ersten Steuersignal der Steuereinheit eine erste Form annimmt, in der das Aktuatorelement 24 eine erste Ruheposition einnimmt, und das in Abhängigkeit von einem zweiten Steuersignal eine Form annimmt, in der das Aktuatorelement 24 eine zweite Anstellposition einnimmt. Das am freien Ende des Aktuators 14 befindliche ringartige Element kann als ein Dämpfungselement vorgesehen werden.

Mit dem Aktuator 14 können Schaltzeiten im Bereich von ca. 40 ms in beide Richtungen ausgeführt werden.

Denkbar ist dabei auch, dass ein Hubweg der Fluidventilmembran 16 in einem Bereich von ca. 6 mm oder auch mehr, insbesondere - beispielsweise im Zusammenhang mit Flüssigkeiten - von mehr als 10 mm möglich ist.

Die Stellkraft kann in einer Größenordnung von wenigstens ca. 200-400 N, insbesondere ca. 350-370 N, vorzugsweise ca. 360 N liegen.

Der Fluidweg 20 kann beispielsweise eine Abmessung von ca. 24 mm aufweisen.

Arbeitsdrücke können im Bereich zwischen 3 bis 10 bar, insbesondere 8 bar oder bei Anpassung der Membranfläche der Fluidventilmembran 16 bei ca. 6 bar liegen.

Bei den Schaltzeiten kann als weitere Charakteristik erreicht werden, dass drei Schaltzyklen in einem Zeitraum von höchstens 1,2 s durchgeführt werden können.

Die Funktion des Aktuators 14 besteht darin, die Fluidventilmembran 16 in wenigstens einer ersten Schaltstellung freizugeben und in wenigstens einer zweiten Schaltstellung derart zu betätigen, dass sie einen Fluidweg 20 der Befüllungseinheit 12 dichtend verschließt.

Das Aktuatorelement 24 betätigt in der ersten Ausdehnung eine erste Schaltstellung, in der die Fluidventilmembran 16 in dem Fluidweg 20 der Befüllungseinheit 12 dichtend betätigt ist (geschlossene Stellung) und in der zweiten Ausdehnung eine zweite Schaltstellung, in der die Fluidventilmembran 16 nicht betätigt ist (offene Stellung).

Grundsätzlich kann vorgesehen sein, dass der Aktuator 14 eine NORMAL OFFEN Ausführung betrifft, in der der Aktuator 14 im nicht betätigten Zustand die Fluidventilmembran 16 nicht betätigt.

Grundsätzlich kann aber auch vorgesehen sein, dass der Aktuator 14 eine NORMAL GESCHLOSSEN Konfiguration aufweist, dies bedeutet, dass der Aktuator 14 im nicht betätigten Zustand dafür sorgt, dass die Fluidventilmembran 16 dichtend betätigt ist und den Fluidweg 20 der Befüllungseinheit 12 dichtend verschließt.

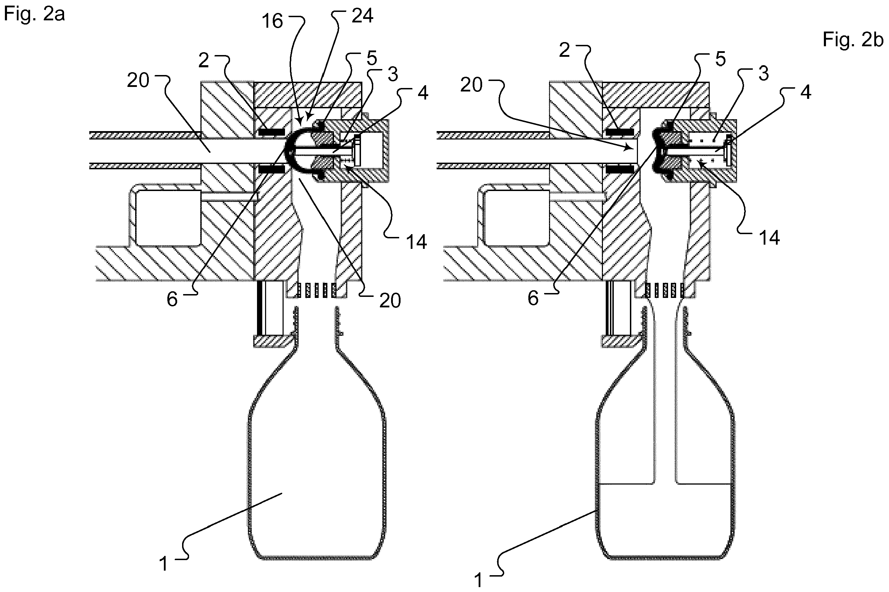

In den Figuren 2 bis 12 werden verschiedene Ausführungsbeispiele von Aktuatoren 14 mit teilweise sehr unterschiedlichen Aktuatorelementen 24, 24' gezeigt. Gleiche oder gleichwirkende Teile sind in den Figuren mit den gleichen Bezugszeichen bezeichnet. Die Aktuatorenelemente 24 aller Ausführungsbeispiele bestehen aus oder enthalten MRE-Material.

In den Fig. 2a und 2b ist schematisch ein erstes Ausführungsbeispiel eines erfindungsgemäßen Aktuators 14 mit einem Aktuatorelement 24, dessen Fluidventilmembran 16 sich in zwei Stellungen befindet, dargestellt: in Fig. 2a bei geschlossenem Fluidweg 20 und in Fig. 2b bei geöffnetem Fluidweg 20.

Die Fluidventilmembran 16 ist vollständig aus einem MRE und ist scheibenförmig ausgebildet. Sie weist an ihrem Rand einen Sitzteil 5 auf, der fest in dem Aktuator 14 verankert ist. Der innere Teil dieser Fluidventilmembran 16 ist als Schließteil 5 ausgebildet, das seine Form ändern kann und in zwei Positionen dargestellt ist.

In der Mitte der Fluidventilmembran 16 ist ein Stößel 4 angebracht, der die Fluidventilmembran 16 mittels einer Feder 3 nach rechts, in die in Fig. 2b dargestellten Stellung zu bewegen, in der der Fluidweg 20 geöffnet ist.

Um die in Fig. 2a dargestellte Position zu erreichen, in der die Fluidventilmembran 16 im Bereich ihres Schließteils 6 eine Ausbuchtung aufweist, die den Fluidweg 20 schließt, wird ein Elektromagnet 2 bestromt und zieht somit das MRE-Material aus dem die Fluidventilmembran 16 besteht, gegen den Druck der Feder 3 an. Wenn der Strom im Elektromagneten 2 abgeschaltet wird, bewegt sich aufgrund der Rückstellkraft der Feder 3 der Schließteil 6 der Fluidventilmembran 16 wieder nach rechts in die in Fig. 2b gezeigte Stellung und öffnet den Fluidweg 20.

Es liegt eine NORMAL OFFEN Ausführung vor. Eine NORMAL GESCHLOSSEN Ausführung ist ebenso realisierbar; der Fachmann weiß, wie er dies bewerkstelligt.

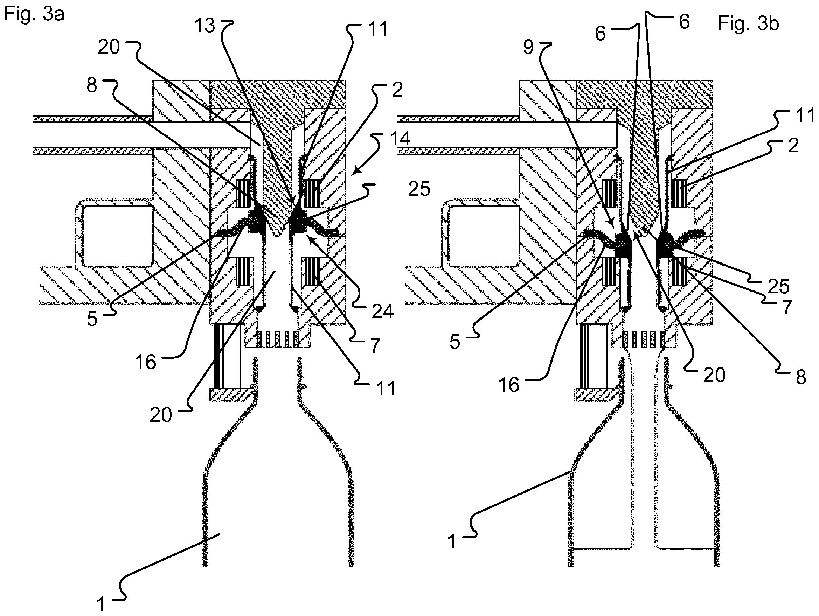

In den Fig. 3a und 3b ist schematisch ein zweites Ausführungsbeispiel eines nicht erfindungsgemäßen Aktuators 14, der deutlich verschieden zu demjenigen des ersten Ausführungsbeispiels der Fig. 2a und 2b aufgebaut ist.

Das aus MRE bestehende Aktuatorelement 24 ist nicht als Fluidventilmembran 16 ausgebildet. Es weist eine Ringform auf, dessen äußerer Rand als Sitzteil 5 fest mit dem Aktuator 14 verbunden ist. Im Fluidweg 20 ist zentral ein Dorn 8 angeordnet, der von einem Faltenbalg 11 umgeben ist. Der Faltenbalg 11 kann sich in Längsrichtung des Dorns 8 falten. An der Außenfläche des Faltenbalgs 11 ist der innere Rand 25 des Rings an einem als Schließteil 6 ausgebildeten beweglichen Teil 9, das den Faltenbalg 11 in einen oberen und einen unteren Teil teilt, festgelegt. Oberhalb des Aktuatorelements 24 ist ein erster Elektromagnet 2 und unterhalb des Aktuatorelements 24 ist ein zweiter Elektromagnet 7 angeordnet. Anstatt den Faltenbalg 11 zweiteilig auszubilden - mit dem beweglichen Teil 9 zwischen oberem und unterem Teil -, ist es auch möglich, das bewegliche Teil 9 an der Außenfläche eines einstückigen Faltenbalgs 11 anzubringen (bspw. durch Verklebung oder andere, dem Fachmann geläufige Verbindungsmethoden). Dann ist der Schließteil 6 an der Innenfläche des Faltenbalgs 11 ausgebildet in dem Bereich, in dem das bewegliche Teil 9 mit ihm verbunden ist.

Bei der Bestromung des ersten Elektromagneten 2 wird das MRE-Material des Aktuatorelements 24 in seinem Schließteil 6 nach oben gezogen, so dass der Faltenbalg 11 mit seinem konischen Verschlussteil 13 an dem Dorn 8 anliegt und den Fluidweg 20 verschließt.

Wird der zweite Elektromagnet 7 bestromt, wird das Aktuatorelement 24 in seinem Schließteil 6 nach unten in seine in Fig. 3b dargestellte Position gezogen. In dieser wird zwischen dem Verschlussteil 13 des Faltenbalgs 11 und dem Dorn 8 ein Ringspalt gebildet, der den Fluidweg 20 freigibt.

Dadurch, dass zwei Elektromagneten 2, 7 vorhanden sind, die das Aktuatorelement 24 zwischen den beiden in den Fig. 3a und 3b dargestellten Positionen bewegt, ist keine Feder 3 nötig, um diese Bewegung zu bewirken.

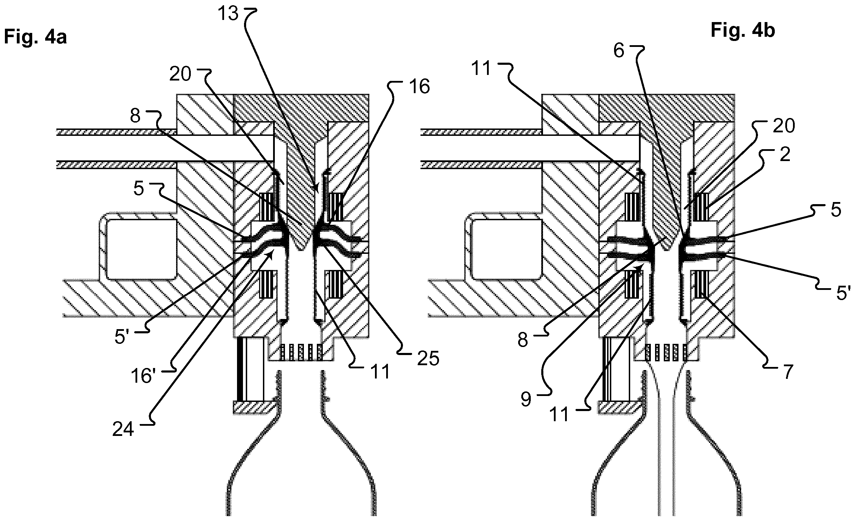

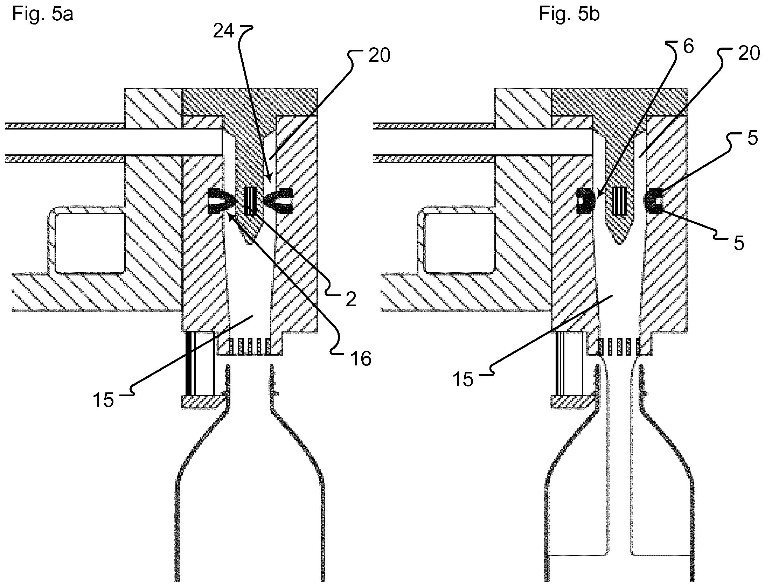

Die bei der Bestromung der Elektromagnete 2, 7 entstehenden Feldlinien 27 sind in Fig. 3a und 3b nicht dargestellt. Dasselbe gilt auch für die Fig. 4a und 4b sowie 5a.

Es sei noch erwähnt, dass es auch möglich ist, anstatt des ringförmigen Aktuatorelements 24 das bewegliche Teil 9 aus MRE enthaltendem Material (bzw. vollständig aus MRE bestehendem Material) zu fertigen. Dann kann das in den Fig. 3a und 3b dargestellte ringförmige Aktuatorelement 24 ganz entfallen, da das bewegliche Teil 9 die Funktion des Aktuatorelements 24 übernimmt.

In den Fig. 4a und 4b ist schematisch ein drittes Ausführungsbeispiel eines nicht erfindungsgemäßen Aktuators 14 mit zwei Aktuatorlementen 24, 24' anstatt nur einem einzigen Aktuatorelement 24 gemäß den Fig. 3a und 3b. Im Folgenden wird nur auf die Unterschiede zum Ausführungsbeispiel der Fig. 3a und 3b eingegangen.

Jedes der beiden Aktuatorelemente 24, 24' ist so aufgebaut und mit dem Faltenbalg 11 über das bewegliche Teil 9 - an dem der Schließteil 6 ausgebildet ist - verbunden, wie das einzige Aktuatorelement 24 des vorangegangenen Ausführungsbeispiels. Die Elektromagnete 2, 7 sind so ausgeführt, dass sie separat einstellbare Feldstärken produzieren können. Damit ist es möglich, auch Zwischenstellungen des Faltenbalgs 11 zum Dorn 8 einzustellen; in diesen Zwischenstellungen - eine ist in Fig. 4b dargestellt - ist die Größe des Ringspalts zwischen Verschlussteil 13 des Faltenbalgs 11 und Dorn 8 jeweils unterschiedlich. Somit kann der Fluidweg 20 eingestellt werden und es ergibt sich die Möglichkeit, den Aktuator 14 als Zulaufdrossel zu nutzen.

Auch beim dritten Ausführungsbeispiel ist es möglich, den Faltenbalg 11 einteilig oder zweiteilig auszuführen, wie dies schon zu den Fig. 3a und 3b ausgeführt wurde. Ebenso ist es möglich, anstatt die Aktuatorelemente 24, 24' mit MRE-Material zu fertigen, das bewegliche Teil aus einem solchen Material herzustellen.

In den Fig. 5a und 5b ist schematisch ein viertes Ausführungsbeispiel eines erfindungsgemäßen Aktuators 14 dargestellt, mit einer Ausgestaltung, die stark von den beiden bisher erläuterten Prinzipien der ersten bis dritten Ausführungsbeispiele abweicht.

In einem Dorn 8 - vergleichbar demjenigen der Fig. 3a, 3b, 4a und 4b - ist ein Elektromagnet 2 angebracht. Zwischen dem Dorn 8 und der Innenwand 15 des Aktuators 14 ist ein Ringspalt ausgebildet, der den Fluidweg 20 darstellt. Um den Fluidweg 20 - der in Fig. 5b in seinem geöffneten Zustand dargestellt ist, zu schließen, ist an der Innenwand 15 des Aktuators 14 ein ringförimges Aktuatorelement 24 angeordnet. Innerhalb der Innenwand 15 ist das Aktuatorelement 24 an zwei in den Figuren 5a und 5b übereinander liegenden Stellen fest mit dem Aktuator 14 verbunden. Diese Stellen sind somit die Sitzteile 5 des Aktuatorelements 24. Dazwischen erstreckt sich - im Querschnitt gesehen - U-förmig der Schließteil 6 des Aktuatorelements 24, das als Fluidventilmembran 16 ausgebildet ist und aus einem MRE-Material besteht. Beim Bestromen des Elektromagneten 2 wird der Schließteil 6 auf den Dorn zubewegt bis er eine V-Form annimmt, an diesem anliegt und den Fluidweg 20 verschließt. Dies ist in Fig. 5a dargestellt. Wird der Strom des Elektromagneten 2 abgestellt, bewegt sich der Schließteil 6 wieder in seine in Fig. 5b dargestellte Position und öffnet den Fluidweg 20 wieder.

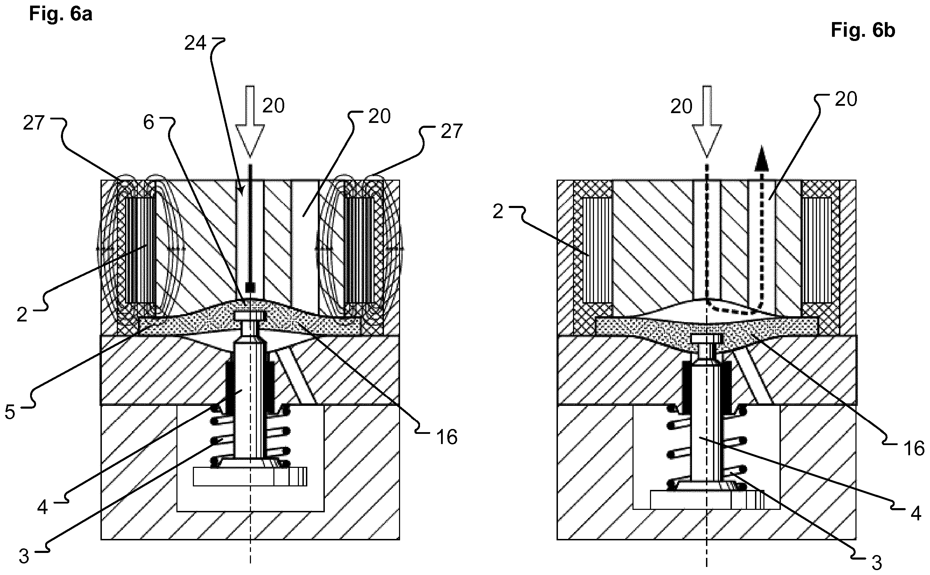

In den Fig. 6a und 6b ist schematisch ein fünftes Ausführungsbeispiel eines erfindungsgemäßen Aktuators 14 dargestellt, mit einer Ausgestaltung, die derjenigen des ersten Ausführungsbeispiels der Fig. 2a und 2b ähnlich ist. Auch hier wird eine Feder 3 in Verbindung mit einem Elektromagneten 2 zum Öffnen und Schließen des Fluidwegs 20 eingesetzt. Der Unterschied zum ersten Ausführungsbeispiel liegt - neben der unterschiedlichen Einbaurichtung - im Wesentlichen darin, dass die Form des Fluidwegs 20 und die Form der Fluidventilmembran 16 unterschiedlich sind. Die Fluidventilmembran 16 ist im geschlossenen Zustand des Fluidwegs 20 gemäß Fig. 6a nicht - im Querschnitt gesehen - quasi U-förmig, sondern weist nur eine geringe Hutform mit Wölbung nach oben - in Richtung des verschlossenen Fluidwegs 20 - auf. Außerdem ist der Fluidweg 20 so ausgebildet, dass er im Bereich seiner Wechselwirkung mit der Fluidventilmembran 16 um 180° gebogen ist - im ersten Ausführungsbeispiel nur um 90°.

Zum Schließen des Fluidwegs (siehe Fig. 6a) wird der Elektromagnet 2 bestromt - dies wird durch die dabei entstehenden Feldlinien 27 verdeutlicht - und somit das MRE-Material des Aktuatorelements 24 nach oben gezogen; gegen die Rückstellkraft einer Feder 3, die an einem Stößel 4 angreift, der zentral mit der Fluidventilmembran 16 verbunden ist. Geöffnet wird der Fluidweg 20, indem der Strom vom Elektromagneten 2 genommen wird und die Rückstellkraft der Feder 3 die Fluidventilmembran 16 über den Stößel 4 nach unten in die in Fig. 6b dargestellte Position zieht und damit den Fluidweg 20 öffnet. Es liegt eine NORMAL OFFEN Ausführung vor.

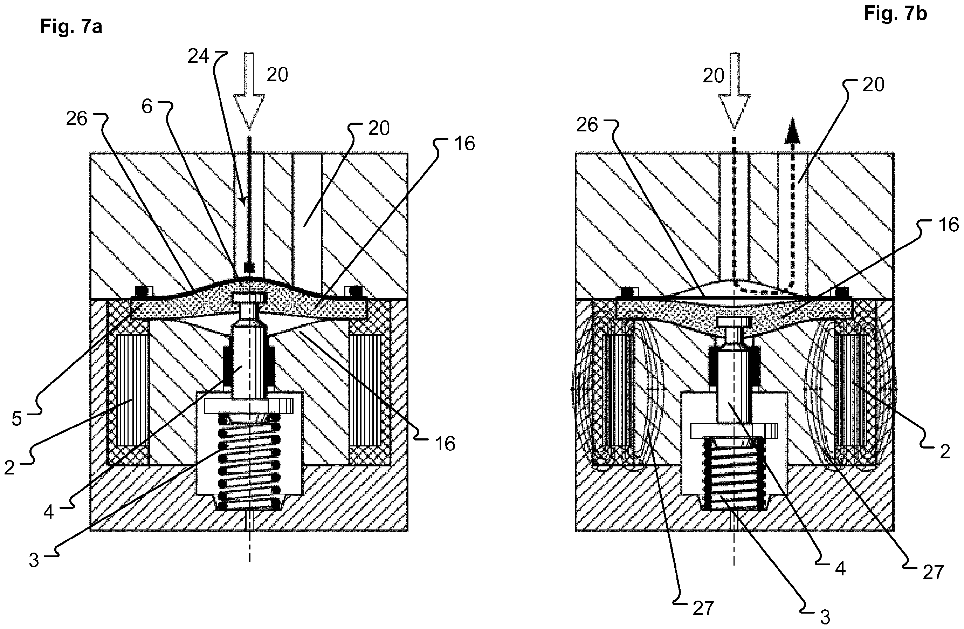

In den Fig. 7a und 7b ist schematisch ein sechstes Ausführungsbeispiel eines erfindungsgemäßen Aktuators 14 dargestellt, dass sich von dem sechsten Ausführungsbeispiel der Fig. 6a und 6b im Wesentlichen in zwei Punkten unterscheidet.

Zum Einen ist es eine NORMAL GESCHLOSSEN Ausführung. Hierfür ist der Elektromagnet 2 unterhalb der Fluidventilmembran 16 angebracht und eine Feder 3 drückt im unbestromten Zustand des Elektromagneten 2 (siehe Fig. 7a) die Fluidventilmembran 16 nach oben, so dass der Fluidweg 20 geschlossen ist. Zur Öffnung des Fluidwegs 20 wird der Elektromagnet 2 bestromt - dies wird durch die dabei entstehenden Feldlinien 27 in Fig. 7b verdeutlicht - und zieht damit die Fluidventilmembran 16 gegen die Federkraft nach unten. Wird der Strom abgeschaltet, drückt die Feder 3 den Stößel samt damit verbundener Fluidventilmembran 16 nach oben in die Ausgangsstellung gemäß Fig. 7a.

Zum Anderen ist der Schließteil 6 nicht an der Fluidventilmembran 16 ausgebildet, sondern an einer mit der Fluidventilmembran 16 in deren Außenbereich verbundenen fluiddichten Zusatzmembran 26. Diese Zusatzmembran 26 besteht und aus einem flexiblen Kunststoff. Sie wird von der aus MRE bestehenden Fluidventilmembran 16 bewegt. Im unbestromten Zustand der Fig. 7a drückt die Fluidventilmembran 16 von unten auf die Zusatzmembran 26, so dass deren Schließteil 6 den Fluidweg 20 verschließt. Hingegen wird die Fluidventilmembran 16 im bestromten Zustand der Fig. 7b gegen die Kraft der Feder 3 nach unten gezogen und berührt somit die Zusatzmembran 26 nicht mehr in deren zentralen Bereich, an dem der Schließteil 6 ausgebildet ist. Somit ist hier der Fluidweg 20 geöffnet.

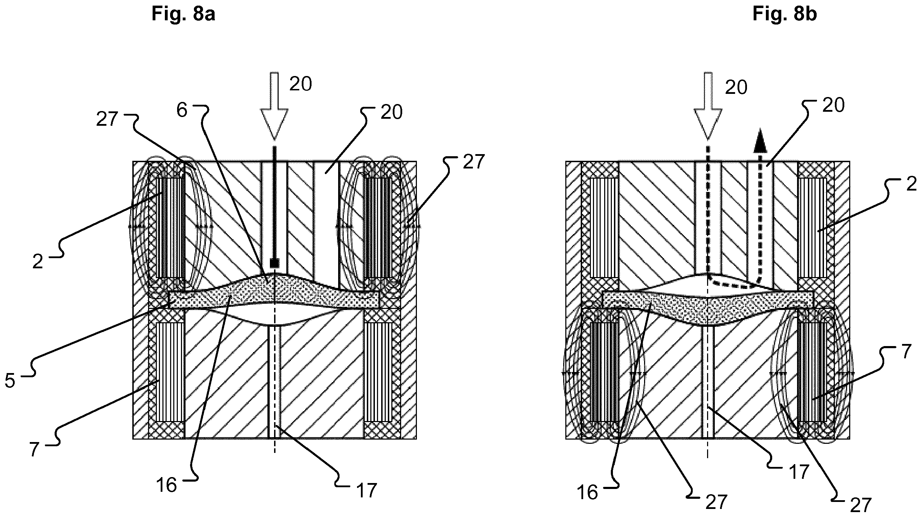

In den Fig. 8a und 8b ist schematisch ein siebtes Ausführungsbeispiel eines erfindungsgemäßen Aktuators 14, das quasi eine Kombination der beiden Ausführungsbeispiele gemäß den Figuren 6a, 6b und 7a, 7b ist. Es werden ein erster Elektromagnet 2 und ein zweiter Elektromagnet 7 verwendet, die ober- und unterhalb der Fluidventilmembran 16 angeordnet sind. Bei der Bestromung des ersten Elektromagneten 2 wird die Fluidventilmembran 16 nach oben gezogen und verschließt den Fluidweg 20 (siehe Fig. 8a). Zum Öffnen des Fluidwegs wird der erste Elektromagnet 2 abgeschaltet und der zweite Elektromagnet 7 bestromt. Dadurch wird die Fluidventilmembran 16 nach unten gezogen und gibt den Fluidweg 20 frei. Diese Ausführungsform benötigt somit keine Feder 3 zur Rückholung der Fluidventilmembran 16 in ihre Ausgangsposition. Die bei der Bestromung des jeweiligen Elektromagneten 2, 7 entstehenden Feldlinien 27 sind jeweils dargestellt.

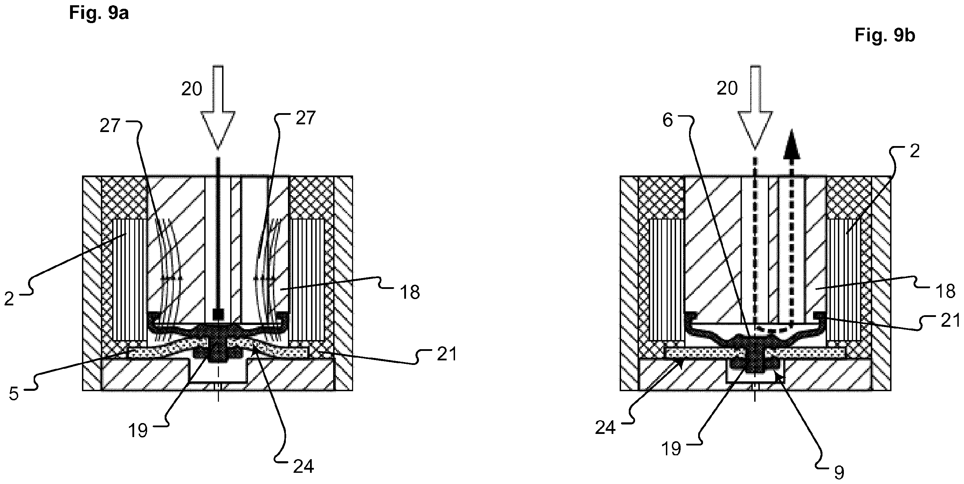

In den Fig. 9a und 9b ist schematisch ein achtes Ausführungsbeispiel eines nicht erfindungsgemäßen Aktuators 14. Hier handelt es sich vom Prinzip her um einen Aktuator 14, der demjenigen des sechsten Ausführungsbeispiels der Fig. 6a und 6b ähnlich ist: Es liegt eine NORMAL OFFEN Ausführung vor.

Die Rückstellkraft zur Öffnung des Fluidwegs 20 (siehe Fig. 9b) wird durch ein bewegliches Teil 9 in der Form eines Kunststoffteils 19 - bspw. aus PTFE - zur Verfügung gestellt. Hierfür ist das Kunststoffteil 19 zentral mit der Fluidventilmembran 16 verbunden und an seinem äußeren Rand fest in dem Gehäuseteil 18 verankert. Beim Bestromen des Elektromagneten 2 - dies wird durch die dabei entstehenden Feldlinien 27 in Fig. 9a verdeutlicht - wird der Schließteil 6 des Aktuatorelements 24 - das keine Fluidventilmembran 16 aufweist - gegen die immanente Spannung des Kunststoffteils 19 nach oben bewegt. Dabei wird der geschlossene Zustand des Fluidwegs 20 (siehe Fig. 9a) erreicht und der obere mittlere Teil des Kunststoffteils 19 ist als Schließteil 6 so ausgebildet, dass er den Fluidweg 20 verschließt. Dieser mittlere Teil übernimmt demnach die Aufgabe der Fluidventilmembran 16 der vorherigen Ausführungsbeispiele. Nach dem Abschalten des Stroms des Elektromagneten 2 wird der Schließteil 6 des Aktuatorelements 24 aufgrund der oben genannten Rückstellkraft des Kunststoffteils 19 wieder nach unten bewegt und der in Fig. 9b dargestellte Zustand erreicht.

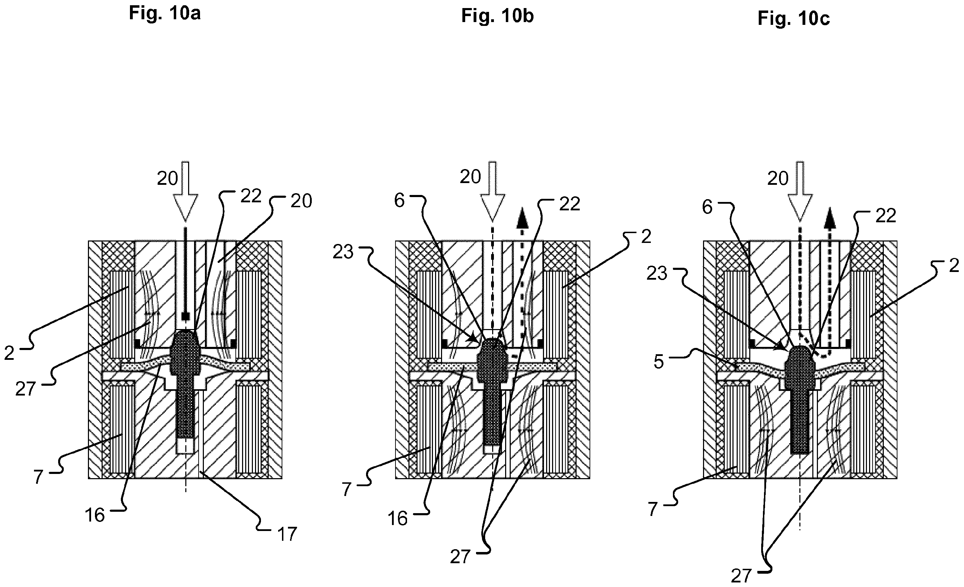

In den Fig. 10a bis 10c ist schematisch ein neuntes Ausführungsbeispiel eines nicht erfindungsgemäßen Aktuators 14 dargestellt, das ein ähnliches Prinzip verfolgt wie das der in den Fig. 3a, 3b und 4a, 4b dargestellten Ausführungsbeispiele. Es werden zwei Elektromagnete 2, 7 verwendet, die den Schließteil 6 des Aktuatorelements 24 zwischen einer unteren Position (siehe Fig. 10a) und einer oberen Position (siehe Fig. 10c) bewegen können. Zentral mit dem Schließteil 6 ist ein Kopf 22 verbunden, der in seinem oberen Endbereich eine Sitzfläche 23 aufweist, die mit einer konischen Fläche des Fluidwegs 20 zusammenwirken kann.

In Fig. 10a ist nur der erste Elektromagnet 2 bestromt, so dass der Schließteil 6 nach oben gezogen wird und die Sitzfläche 23 des Kopfes 22 dichtend in den Fluidweg 20 eingefahren ist. Die andere Extremposition des Schließteils 6 ist in Fig. 10c gezeigt. Dort ist nur der zweite Elektromagnet 7 bestromt, so dass der Kopf 22 ganz nach unten gezogen wurde und in einer Anschlagposition ist. In dieser Position ist der Fluidweg 20 vollständig geöffnet. Zwischen den genannten beiden Extrempositionen kann der Kopf 22 in jeder Zwischenposition durch geeignete Wahl der jeweiligen Feldstärken der beiden Elektromagnete 2, 7 gehalten werden (Fig. 10b). Dadurch ist der Kopf 22 mehr oder weniger weit in den Fluidweg 20 eingefahren und aufgrund der konischen Sitzfläche 23 in Verbindung mit der konischen Fläche des Fluidwegs 20 wird ein Ringspalt variabler Größe (je nachdem, wie weit der Kopf 22 in den Fluidweg 20 eingefahren ist) zwischen diesen beiden gebildet. Dadurch kann die Durchflussmenge geregelt werden. Die bei der Bestromung des jeweiligen Elektromagneten 2, 7 entstehenden Feldlinien 27 sind jeweils dargestellt.

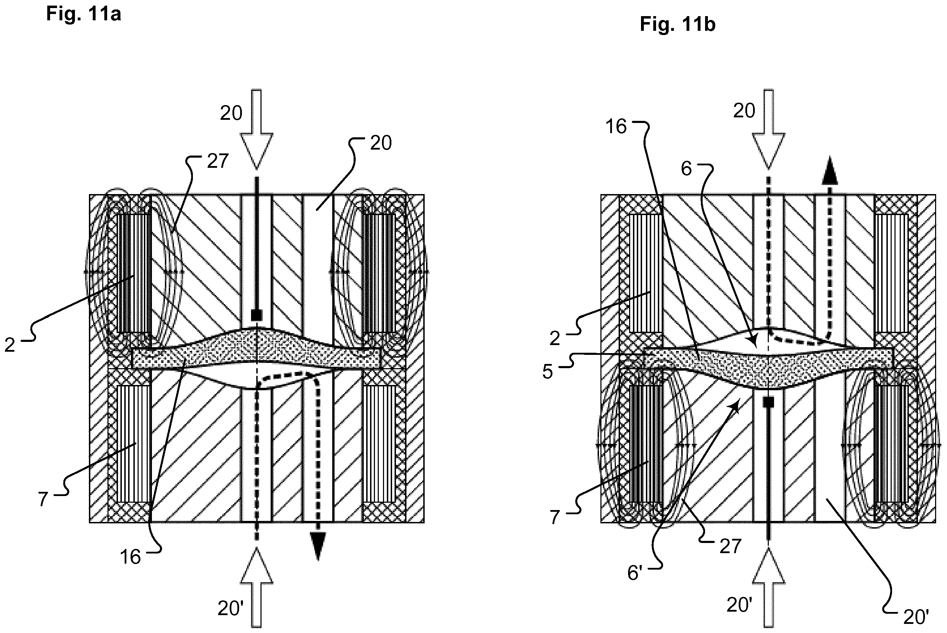

In den Fig. 11a und 11b ist schematisch ein zehntes Ausführungsbeispiel eines erfindungsgemäßen Aktuators 14 mit einem Doppelventil. Alle bislang besprochenen Ausführungsbeispiele hatten nur einen Fluidweg 20. In dem elften Ausführungsbeispiel sind zwei Fluidwege 20, 20' vorhanden: ein erster Fluidweg 20 oberhalb der Fluidventilmembran 16 und ein zweiter Fluidweg 20' unterhalb derselben. Je nachdem, welcher der beiden Elektromagnete 2, 7 bestromt ist, ist der erste Fluidweg 20 (siehe Fig. 11a) oder der zweite Fluidweg 20' (siehe Fig. 11b) geschlossen. Die Bewegung der Fluidventilmembran 16 entspricht exakt derjenigen des achten Ausführungsbeispiels der Fig. 8a und 8b, so dass zur Vermeidung von Wiederholungen auf die dortigen Ausführungen verwiesen wird. Die bei der Bestromung des jeweiligen Elektromagneten 2, 7 entstehenden Feldlinien 27 sind jeweils dargestellt.

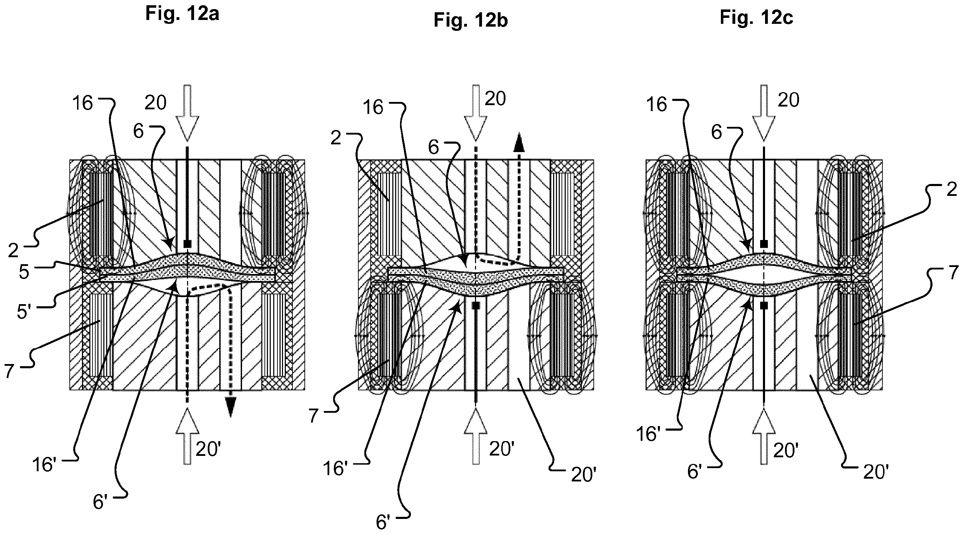

In den Fig. 12a bis 12c ist schematisch ein elftes Ausführungsbeispiel eines erfindungsgemäßen Aktuators 14 wird - wie im gerade beschriebenen elften Ausführungsbeispiel - ein Doppelventil verwendet. Dieses ist bis auf einen Unterschied gleich aufgebaut wie das zuvor beschriebene Ausführungsbeispiel: anstatt einer einzigen Fluidventilmembran 16 sind zwei Fluidventilmembrane 16, 16' vorhanden, die direkt übereinander eingebaut sind und deren Sitzteile 5, 5' sich berühren.

Die erste, oben angeordnete Fluidventilmembran 16 öffnet oder schließt den ersten Fluidweg 20 und die zweite, unten angeordnete Fluidventilmembran 16' öffnet oder schließt den zweiten Fluidweg 20'. Hierfür stehen ein erster, oben angeordneter Elektromagnet 2 und ein zweiter, unten angeordneter Elektromagnet 7 zur Verfügung.

Wird nur der erste Elektromagnet 2 bestromt (siehe Fig. 12a), werden die beiden Fluidventilmembrane 16, 16' nach oben gezogen und die nach oben gewandte Oberfläche der ersten Fluidventilmembran 16 verschließt den ersten Fluidweg 20. Gleichzeitig öffnet die zweite Fluidventilmembran 16' den zweiten Fluidweg 20', da ihre nach unten gewandte Oberfläche nach oben gezogen wird.

Wird nur der zweite Elektromagnet 2' bestromt (siehe Fig. 12b), werden die beiden Fluidventilmembrane 16, 16' nach unten gezogen und die nach unten gewandte Oberfläche der zweiten Fluidventilmembran 16' verschließt den zweiten Fluidweg 20'. Gleichzeitig öffnet die erste Fluidventilmembran 16 den ersten Fluidweg 20, da ihre nach oben gewandte Oberfläche nach unten gezogen wird.

In Fig. 12c ist ein Zustand des Doppelventils dargestellt, in dem beide Fluidwege 20, 20' verschlossen sind. Hierfür sind beide Elektromagnete 2, 7 bestromt. Dadurch wird die erste Fluidventilmembran 16 nach oben und die zweite Fluidventilmembran 16' nach unten gezogen. Somit verschließt die nach oben gewandte Oberfläche der ersten Fluidventilmembran 16 den ersten Fluidweg 20 und die nach unten gewandte Oberfläche der zweiten Fluidventilmembran 16' den zweiten Fluidweg 20'. Anders als in den beiden anderen Positionen der Fig. 12a und 12b berühren sich die Schließteile 6, 6' der beiden Fluidventilmembrane 16, 16' nicht; zwischen ihnen ist ein Hohlraum ausgebildet.

Die bei der Bestromung des jeweiligen Elektromagneten 2, 7 entstehenden Feldlinien 27 sind in den Fig. 12a bis 12c jeweils dargestellt.

### Bezugszeichenliste

- 1: Flasche
- 2: (erster) Elektromagnet
- 3: Feder
- 4: Stößel
- 5, 5': Sitzteil
- 6: Schließteil
- 7: zweiter Elektromagnet
- 8: Dorn
- 9: bewegliches Teil
- 10: Getränkeabfüllanlage
- 11: Faltenbalg
- 12: Befüllungseinheit
- 13: Verschlussteil
- 14: Aktuator
- 15: Innenraum
- 16: Fluidventilmembran
- 17: Luftkanal
- 18: Gehäuseteil
- 19: Kunststoffteil
- 20: Fluidweg
- 21: Befestigungsabschnitt
- 22: Kopf
- 23: Sitzfläche
- 24, 24': Aktuatorelement
- 25: innerer Rand
- 26: Zusatzmembran
- 27: Magnetfeldlinien

## Patentansprüche

1. Aktuator (14) zur Steuerung wenigstens eines Fluidweges (20, 20') einer Befüllungseinheit (12) für eine Getränkeabfüllanlage (10), welcher Aktuator (14) wenigstens eine Steuereinheit und wenigstens ein Aktuatorelement (24, 24'), mittels dessen eine Stellkraft bereitstellbar ist, umfasst, wobei das Aktuatorelement (24, 24') einen zu einem Sitz feststehenden Sitzteil (5, 5') und einen zum Sitz beweglichen Schließteil (6, 6') aufweist, wobei mittels der Steuereinheit wenigstens ein erstes Steuersignal und wenigstens ein zweites Steuersignal bereitstellbar ist und wobei mindestens der Schließteil (6, 6') des Aktuatorelements (24, 24') aus einem Material besteht, das in Abhängigkeit von dem ersten Steuersignal eine erste Form annimmt, in der das Aktuatorelement (24, 24') eine erste Ruheposition einnimmt, und das in Abhängigkeit von dem zweiten Steuersignal eine zweite Form annimmt, in der das Aktuatorelement (24, 24') eine zweite Anstellposition einnimmt, wobei das Material des Aktuatorelementes (24, 24') ein magnetorheologisches Elastomer ist oder umfasst, wobei er mindestens einen Elektromagneten (2, 7) aufweist, wobei sich das Aktuatorelement (24, 24') in dem veränderlichen Magnetfeld des Elektromagneten (2, 7) befindet und das Magnetfeld des Elektromagneten (2, 7) durch das erste und zweite Steuersignal veränderbar ist,
wobei das Aktuatorelement (24, 24') eine Fluidventilmembran (16, 16') ist und der Schließteil (6, 6') Bestandteil der Fluidventilmembran (16, 16') ist.

2. Aktuator (14) nach Anspruch 1, wobei das Aktuatorelement (24, 24') eine Scheibe ist, bei der insbesondere der Rand der feststehende Sitzteil (5, 5') ist.

3. Aktuator (14) nach einem der vorstehenden Ansprüche, wobei das Aktuatorelement (24, 24') mit dem einen Ende einer Feder (3) - Druckfeder oder Zugfeder - verbunden ist und deren anderes Ende fest mit dem Aktuator (14) verbunden ist.

4. Aktuator (14) nach einem der vorhergehenden Ansprüche, wobei er zusätzlich zu dem ersten Aktuatorelement (24) ein weiteres Aktuatorelement (24') aufweist, das gleich ausgebildet ist wie das erste Aktuatorelement (24) und parallel zu diesem angeordnet ist.

5. Aktuator (14) nach Anspruch 4, wobei die beiden Aktuatorelemente (24, 24') in ihrer jeweiligen Ruheposition aneinander anliegen.

6. Aktuator (14) nach einem der vorhergehenden Ansprüche, wobei er ein Doppelventil umfasst.

7. Aktuator (14) nach einem der vorhergehenden Ansprüche, wobei er zwei Elektromagnete (2, 7) aufweist, wobei der erste Elektromagnet (2) oberhalb und der zweite Elektromagnet (7) unterhalb des Aktuatorelements (24, 24') angeordnet sind.

8. Aktuator (14) nach einem der vorhergehenden Ansprüche, wobei das Aktuatorelement (24, 24') in seiner ersten Form eine Schaltstellung definiert, in der die Fluidventilmembran (16, 16'), als die das Aktuatorelement (24, 24') ausgebildet ist, in dem wenigstens einen Fluidweg (20, 20') der Befüllungseinheit (12) dichtend betätigt ist, und das Aktuatorelement (24, 24') in seiner zweiten Form eine Schaltstellung definiert, in der die Fluidventilmembran (16, 16') nicht dichtend betätigt ist.

9. Befüllungseinheit (12) für eine Getränkeabfüllanlage (10) mit wenigstens einem Aktuator (14) nach einem der vorhergehenden Ansprüche.

10. Getränkeabfüllanlage (10) mit wenigstens einem Aktuator (14) nach einem der Ansprüche 1 bis 8 oder mit wenigstens einer Befüllungseinheit (12) nach Anspruch 9.

## Claims

1. Actuator (14) for controlling at least one fluid path (20, 20') of a filling unit (12) for a beverage filling system (10), said actuator (14) having at least one control unit and at least one actuator element (24, 24'), by means of which the actuator element (24, 24') has a seat part (5, 5') that is stationary relative to a seat, and a closure part (6, 6') which is movable relative to the seat, wherein at least one first control signal and at least one second control signal can be provided by means of the control unit, and wherein at least the closure part (6, 6') of the actuator element (24, 24') consists of a material which adopts a first form according to the first control signal, in which the actuator element (24, 24') assumes a first, rest position, and which adopts a second form according to the second control signal, in which the actuator element (24, 24') assumes a second, engagement position, wherein the material of the actuator element (24, 24') is or comprises a magnetorheological elastomer, wherein it comprises at least one electromagnet (2, 7), wherein the actuator element (24, 24') is located in the variable magnetic field of the electromagnet (2, 7), and the magnetic field of the electromagnet (2, 7) can be varied by the first and second control signals, wherein the actuator element (24, 24') is a fluid valve membrane (16, 16') and the closure part (6, 6') is a constituent part of the fluid valve membrane (16, 16').

2. Actuator (14) according to claim 1, wherein the actuator element (24, 24') is a disk, which in particular is the edge of the fixed seat part (5, 5').

3. Actuator (14) according to any one of the preceding claims, wherein the actuator element (24, 24') is connected by the one end to a spring (3), a pressure spring or tension spring, and by the other end is securely connected to the actuator (14).

4. Actuator (14) according to any one of the preceding claims, wherein it comprises, in addition to the first actuator element (24), a further actuator element (24') which is of the same design configuration as the first actuator element (24) and is arranged parallel to this.

5. Actuator (14), according to claim 4, wherein the two actuator elements (24, 24') are in contact with one another in their respective positions of rest.

6. Actuator (14) according to any one of the preceding claims, wherein it comprises a double valve.

7. Actuator (14) according to any one of the preceding claims, wherein it comprises two electromagnets (2, 7), wherein the first electromagnet (2) is arranged above the actuator element (24, 24') and the second electromagnet (7) is arranged beneath it.

8. Actuator (14) according to any one of the preceding claims, wherein the actuator element (24, 24') in its first form defines a switching position in which the fluid valve membrane (16, 16') is configured as the actuator element (24, 24'), in which at least one fluid path (20, 20') of the filling unit (12) is actuated such as to provide a seal, and the actuator element (24, 24') in its second form defines a switching position in which the fluid valve membrane (16, 16') is actuated such that it does not provide a seal.

9. Filling element (12) for a beverage filling system (10) with at least one actuator (14) according to any one of the preceding claims.

10. Beverage filling system (10) with at least one actuator (14) according to any one of claims 1 to 8, or with at least one filling unit (12) according to claim 9.

## Revendications

1. Actionneur (14) destiné à commander au moins une trajectoire de fluide (20, 20') d'une unité de remplissage (12) pour une installation de transvasement de boisson (10), lequel actionneur (14) comprend au moins une unité de commande et au moins un élément d'actionneur (24, 24'), au moyen duquel une force de réglage peut être fournie, dans lequel l'élément d'actionneur (24, 24') présente une partie de siège (5, 5') immobile par rapport à un siège et une partie de fermeture (6, 6') mobile par rapport au siège, dans lequel au moins un premier signal de commande et au moins un deuxième signal de commande peuvent être fournis au moyen de l'unité de commande et dans lequel au moins la partie de fermeture (6, 6') de l'élément d'actionneur (24, 24') est constituée d'un matériau, qui adopte, en fonction du premier signal de commande, une première forme, dans laquelle l'élément d'actionneur (24, 24') prend une première position de repos, et qui adopte, en fonction du deuxième signal de commande, une deuxième forme, dans laquelle l'élément d'actionneur (24, 24') adopte une deuxième position de contact, dans lequel le matériau de l'élément d'actionneur (24, 24') est ou comprend un élastomère magnétorhéologique, dans lequel l'actionneur présente au moins un électroaimant (2, 7), dans lequel l'élément d'actionneur (24, 24') se trouve dans le champ magnétique variable de l'électroaimant (2, 7) et le champ magnétique de l'électroaimant (2, 7) peut être modifié par le premier et le deuxième signal de commande,
dans lequel l'élément d'actionneur (24, 24') est une membrane de soupape de fluide (16, 16') et la partie de fermeture (6, 6') fait partie intégrante de la membrane de soupape de fluide (16, 16').

2. Actionneur (14) selon la revendication 1, dans lequel l'élément d'actionneur (24, 24') est un disque, pour lequel en particulier le bord est une partie de siège (5, 5') immobile.

3. Actionneur (14) selon l'une quelconque des revendications précédentes, dans lequel l'élément d'actionneur (24, 24') est relié à une extrémité d'un ressort (3) - ressort de pression ou ressort de traction - et son autre extrémité est reliée de manière solidaire à l'actionneur (14).

4. Actionneur (14) selon l'une quelconque des revendications précédentes, dans lequel il présente en plus du premier élément d'actionneur (24) un autre élément d'actionneur (24'), qui est réalisé de manière identique au premier élément d'actionneur (24) et qui est disposé de manière parallèle à celui-ci.

5. Actionneur (14) selon la revendication 4, dans lequel les deux éléments d'actionneur (24, 24') reposent l'un sur l'autre dans leur position de repos respective.

6. Actionneur (14) selon l'une quelconque des revendications précédentes, dans lequel il comprend une soupape double.

7. Actionneur (14) selon l'une quelconque des revendications précédentes, dans lequel il présente deux électroaimants (2, 7), dans lequel le premier électroaimant (2) est disposé au-dessus de l'élément d'actionneur (24, 24') et le second électroaimant (7) est disposé en dessous.

8. Actionneur (14) selon l'une quelconque des revendications précédentes, dans lequel l'élément d'actionneur (24, 24') définit dans sa première forme une position de commutation, dans laquelle la membrane de soupape de fluide (16, 16'), en tant que laquelle l'élément d'actionneur (24, 24') est réalisé, est activée de manière étanche sur l'au moins une trajectoire de fluide (20, 20') de l'unité de remplissage (12), et l'élément d'actionneur (24, 24') définit dans sa deuxième forme une position de commutation, dans laquelle la membrane de soupape de fluide (16, 16') n'est pas activée de manière étanche.

9. Unité de remplissage (12) pour une installation de transvasement de boisson (10) avec au moins un actionneur (14) selon l'une quelconque des revendications précédentes.

10. Installation de transvasement de boisson (10) avec au moins un actionneur (14) selon l'une quelconque des revendications 1 à 8 ou avec au moins une unité de remplissage (12) selon la revendication 9.
